# EUROPÄISCHE PATENTSCHRIFT

(11) **EP 0 744 740 B1**
(45) Veröffentlichungstag und Bekanntmachung des Hinweises auf die Patenterteilung: **06.08.2003**
(21) Anmeldenummer: 96201391.8
(22) Anmeldetag: 17.05.1996
(51) Int. Cl.: G11B 15/62, G11B 5/10, G11B 15/60

(54) **Magnetkopf mit einer Bandführungsvorrichtung**
Magnetic head with tape guiding device
Tête magnétique avec dispositif de guidage de bande

(30) Priorität: 26.05.1995 DE 19519371
(43) Veröffentlichungstag der Anmeldung: 27.11.1996
(73) Patentinhaber: Philips Intellectual Property & Standards GmbH, 20099 Hamburg (DE); Koninklijke Philips Electronics N.V., 5621 BA Eindhoven (NL)
(72) Erfinder: Kunze, Norbert, 22335 Hamburg (DE)
(74) Vertreter: von Laue, Hanns-Ulrich, Dipl.-Ing.

(56) Entgegenhaltungen:
- EP-A- 0 120 518
- EP-A- 0 652 557
- US-A- 3 833 925
- US-A- 4 586 098
- PATENT ABSTRACTS OF JAPAN vol. 018, no. 216 (P-1728), 18.April 1994 & JP 06 012610 A (SHARP CORP), 21.Januar 1994,
- PATENT ABSTRACTS OF JAPAN vol. 007, no. 087 (P-190), 9.April 1983 & JP 58 014355 A (MATSUSHITA DENKI SANGYO KK), 27.Januar 1983,
- PATENT ABSTRACTS OF JAPAN vol. 011, no. 151 (P-576), 16.Mai 1987 & JP 61 287027 A (KATSUO OKAMOTO), 17.Dezember 1986,
- PATENT ABSTRACTS OF JAPAN vol. 008, no. 208 (P-302), 21.September 1984 & JP 59 092414 A (NIPPON VICTOR KK), 28.Mai 1984,
- PATENT ABSTRACTS OF JAPAN vol. 007, no. 142 (P-205), 22.Juni 1983 & JP 58 056214 A (KIYANON DENSHI KK), 2.April 1983,

## Beschreibung

Die Erfindung bezieht sich auf eine Magnetkopf/Bandführungseinheit für ein Magnetbandkassettengerät und auf ein Verfahren zur Herstellung einer solchen Einheit.

Bandführungsvorrichtungen für Magnetköpfe haben die Aufgabe, stets zu gewährleisten, dass die Magnetspuren des Magnetbandes und die Magnetspalten des Magnetkopfes exakt übereinanderliegen.

Eine derartige Anordnung ist z.B. aus der EP 442 512 bekannt. Es ist dabei ein Kunststoffspritzteil vorgesehen, das eine Halterung für einen Magnetkopf und in unmittelbarer Nachbarschaft des Magnetkopfes beiderseits des Magnetkopfes innere Bandführungen aufweist. Darüber hinaus ist vorgesehen, dass an demselben Kunststoffspritzteil im Abstand von den inneren Bandführungen weitere äußere Bandführungen vorgesehen sind, die eine Führung des Magnetbandes beiderseits des Magnetkopfes auf größerer Länge sicherstellen. Die Bandführungen sind gabelförmig ausgebildet und weisen dementsprechend Führungsschenkel auf, an denen das Band entlang laufen kann. Alle Bandführungen und die positionierende Halterung sind als einstückiges Kunststoffspritzteil ausgebildet.

Um den Magnetkopf in der Halterung des Kunststoffspritzteiles zu befestigen, muss dieser zunächst in die Halterung eingebracht und gegenüber den Magnetspalten des Magnetkopfes ausgerichtet werden. Danach wird der Magnetkopf in diesem ausgerichteten Zustand in seiner Halterung fixiert, vorzugsweise durch Kleben.

Ein Klebeprozess weist jedoch einige Nachteile auf. Zunächst muss der Klebstoff nach dem Einbringen in die Magnetkopfhalterung aushärten, was eine Zeitverzögerung im Fertigungsprozess bedingt. Weiter kann es zu Verschmutzungen des Magnetkopfes durch Klebstoffreste kommen. Schließlich wird die Umwelt durch die Klebstoffabfälle unnötig belastet.

Ein Befestigen des Magnetkopfes in der mit den Führungen versehenen Halterung des Kunststoffspritzteiles mittels eines Schweißvorganges ist infolge der unterschiedlichen Materialien von Kunststoffrahmen und Magnetkopf nicht möglich.

Aus US-A-3 833 925 ist ein Schwenkarm bekannt, an den ein zweiter Rahmen befestigt wird, in dem der Magnetkopf angeordnet ist. Der Schwenkarm trägt zusätzlich zwei Bandführungseinheiten und eine Andruckrolleneinheit. Sowohl Magnetkopfrahmen als auch die beiden Bandführungseinheiten werden manuell über den Schwenkarm als mechanische Referenz ausgerichtet. Die Bandführungen richten das Magnetband relativ zum Magnetkopf aus. Der Schwenkarm führt durch Absenken den Magnetkopf und die anderen Einheiten zum Magnetband.

Es ist Aufgabe der vorliegenden Erfindung, eine Magnetkopf/Bandführungseinheit so auszubilden, dass sie in einem schnellen, sauberen und zuverlässigen Fertigungsprozess mit gegenüber den Magnetspalten des Magnetkopfes ausgerichteten Bandführungen gefertigt werden kann. Es ist weiterhin Aufgabe der vorliegenden Erfindung, ein Verfahren zur Herstellung einer solchen Einheit zu definieren.

Diese Aufgabe ist erfindungsgemäß durch Anspruch 1 und Anspruch 5 gelöst.

Der Magnetkopf ist in der Halterung des ersten Kunststoffrahmens, der keine Bandführungen aufweist, form- oder reibschlüssig angeordnet, insbesondere durch ein Einklemmen bzw. Einklicken. Nun läßt sich der zweite Kunststoffrahmen, der die Bandführungen aufweist, zunächst gegenüber den Magnetspalten des Magnetkopfes ausrichten und danach in diesem ausgerichtetem Zustand an dem ersten Kunststoffrahmen befestigen. Dieser Befestigungsvorgang ist mittels eines Schweißverfahrens realisierbar. Durch die Ausbildung zweier zunächst getrennter Kunststoffrahmen, von denen einer die Halterung für den Magnetkopf und der andere die Bandführungen aufweist, läßt sich der Magnetkopf mit gegenüber seinen Magnetspalten ausgerichten Bandführungen schnell, sauber, ohne Verschmutzung des Magnetkopfes, ohne Einsatz eines Klebeprozesses und mit hoher, reproduzierbarer Ausrichtungsgenauigkeit fertigen.

Eine vorteilhafte Ausgestaltung der Erfindung ist dadurch gekennzeichnet, daß der zweite Kunststoffrahmen eine dritte und eine vierte Bandführung aufweist, die jeweils beiderseits des Magnetkopfes weiter außen liegend auf Abstand vom Magnetkopf und den ihm benachbarten ersten und zweiten Bandführungen angeordnet sind, wobei die dritte und vierte Bandführung jeweils gabelförmig mit vorstehenden, die Durchzugsbahn des Magnetbandes begrenzenden Führungsschenkeln ausgebildet sind.

Die erfindungsgemäße Ausbildung des Magnetkopfes ermöglicht es, eine Vielzahl verschiedener Bandführungen zu verwenden. So kann der zweite Kunststoffrahmen auch vier Bandführungen aufweisen, wodurch eine Führung des Magnetbandes auf größerer Länge sichergestellt ist.

Eine weitere vorteilhafte Ausgestaltung der Erfindung ist dadurch gekennzeichnet, daß der erste Kunststoffrahmen wenigstens zwei Befestigungsschenkel aufweist, die frei von dem Magnetkopf abstehend ausgebildet sind, und daß der zweite Kunststoffrahmen an den Befestigungsschenkeln des ersten Kunststoffrahmens befestigt ist.

Mittels der frei abstehenden Befestigungsschenkel kann der zweite Kunststoffrahmen besonders einfach und zuverlässig an den Befestigungsschenkeln des ersten Kunststoffrahmens befestigt werden.

Eine weitere vorteilhafte Ausgestaltung der Erfindung ist dadurch gekennzeichnet, daß der zweite Kunststoffrahmen an den Befestigungsschenkeln des ersten Kunststoffrahmens jeweils zwischen der ersten und der dritten Bandführung und zwischen der zweiten und der vierten Bandführung befestigt ist.

Dies stellt eine besonders einfache und zuverlässige Methode der Befestigung dar.

Eine weitere vorteilhafte Ausgestaltung der Erfindung ist dadurch gekennzeichnet, daß der erste und der zweite Kunststoffrahmen miteinander verschweißt sind.

Für die Herstellung eines erfindungsgemäßen Magnetkopfes eignen sich Verfahren, welche dadurch gekennzeichnet sind, daß der zweite Kunststoffrahmen an dem ersten Kunststoffrahmen mittels eines Schweißvorganges ortsfest befestigt wird.

Durch die Ausbildung zweier Kunststoffrahmen, die miteinander befestigt werden müssen, wird die Verwendung eines Schweißvorganges möglich. Zunächst wird der Magnetkopf in der Halterung des ersten Kunststoffrahmens angeordnet, z.B. durch ein reib- oder formschlüssiges Einklemmen bzw. Einklicken. Danach wird der zweite Kunststoffrahmen gegenüber den Magnetspalten des in der Halterung des ersten Kunststoffrahmens angeordneten Magnetkopfes ausgerichtet. In diesem ausgerichteten Zustand werden nun die beiden Kunststoffrahmen mittels eines Schweißvorganges miteinander verbunden.

Bei einem Magnetkopf, der gemäß der in der EP 442 512 beschriebenen Art ausgebildet ist, wird der Magnetkopf direkt gegenüber dem einzigen Kunststoffrahmen ausgerichtet und muß dann mittels eines Befestigungsvorganges befestigt werden. Hier ist ein Schweißvorgang aufgrund der unterschiedlichen Materialien von Kunststoffrahmen und Magnetkopf nicht möglich.

Eine vorteilhafte Ausgestaltung des Verfahrens ist dadurch gekennzeichnet, daß der Schweißvorgang zwischen der ersten und der dritten und der zweiten und der vierten Bandführung erfolgt.

Dieses Verfahren ist fertigungstechnisch besonders günstig, da der Magnetkopf relativ weit von den Schweißpunkten entfernt ist.

Eine vorteilhafte Ausgestaltung des Verfahrens ist dadurch gekennzeichnet, daß es sich bei dem Schweißvorgang um einen Ultraschall- oder Laserschweißvorgang handelt.

Diese beiden Schweißverfahren sind für das Verschweißen zweier Kunststoffbauteile besonders gut geeignet.

Der erfindungsgemäße Magnetkopf kann vorzugsweise in einem Laufwerk oder in einem Magnetbandkassettengerät mit einem Laufwerk verwendet werden.

Ein Ausführungsbeispiel der Erfindung wird nachfolgend anhand der Zeichnung näher erläutert. Es zeigen:
- Fig. 1: schematisch einen Magnetkopf mit einer gegegenüber Magnetspalten dieses Magnetkopfes ausgerichteten Bandführungsvorrichtung in Ansicht auf eine Durchzugsebene des Magnetbandes
- Fig. 2: eine Seitenansicht des Magnetkopfes mit der Bandführungsvorrichtung in Ansicht auf eine senkrecht zu der Durchzugsebene des Magnetbandes gelegene Ebene.

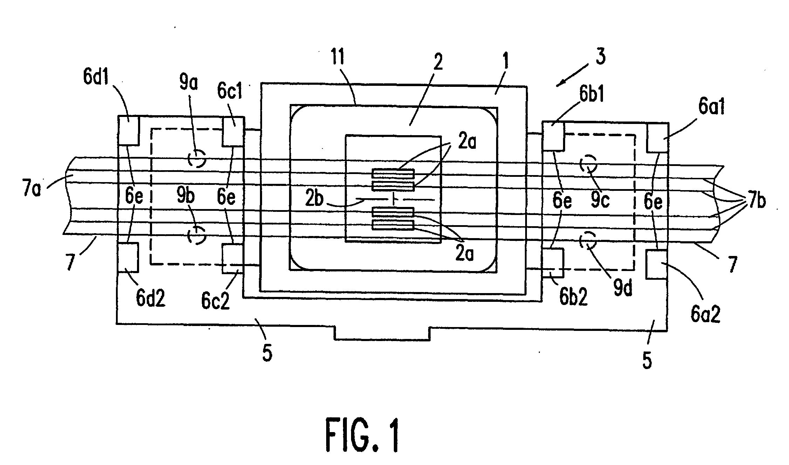

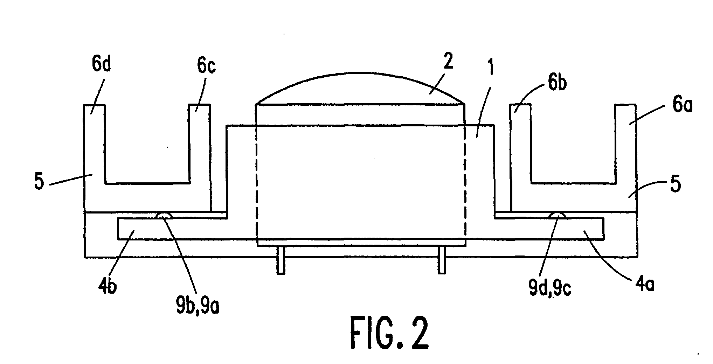

Eine in Fig.1 dargestellte Magnetkopf/Bandführungseinheit 3 eines Magnetbandkassettengerätes weist einen ersten Kunststoffrahmen 1 mit einer Halterung 11 auf, in welcher ein Magnetkopf 2 reibschlüssig bzw. formschlüssig angeordnet ist, z.B. durch ein Einklemmen bzw. Einklicken. Der erste Kunststoffrahmen 1 weist zwei Befestigungsschenkel 4a und 4b auf. Der Magnetkopf 2 weist vier Magnetspalte 2a auf, die in senkrechtem Abstand zu einer Mittellinie 2b angeordnet sind.
Es ist ein zweiter Kunststoffrahmen 5 vorgesehen, der vier Bandführungen 6a bis 6d aufweist. Jede der vier Bandführungen 6a bis 6d ist gabelförmig ausgebildet mit je zwei Führungsschenkeln 6a1, 6a2, 6b1, 6b2, 6c1, 6c2, 6d1, 6d2. Alle Führungsschenkel haben Anlageflächen 6e, die senkrecht zu einer Durchzugsebene 7a eines Magnetbandes 7, welches vier Magnetspuren 7b aufweist, verlaufen. Fig. 2 zeigt die Magnetkopf/Bandführungseinheit 3 in einer Ansicht auf eine senkrecht zu der Durchzugsebene 7a des Magnetbandes 7 gelegene Ebene.

Es sind vier Schweißpunkte 9a bis 9d vorgesehen, an denen die Befestigungsschenkel 4a und 4b des Kunststoffrahmens 1 mit dem Kunststoffrahmen 5 verschweißt ist.

Für die richtige Funktion der Magnetkopf/Bandführungseinheit 3 ist es wichtig, daß die Magnetspuren 7b des Magnetbandes 7 und die zugeordneten Magnetspalten 2a des Magnetkopfes 2 stets exakt übereinanderliegen. Um dies zu gewährleisten, müsssen die Anlageflächen 6e der Bandführungen 6a bis 6d genau parallel zu den Magnetspalten 2a des Magnetkopfes 2 verlaufen.

Die Fertigung der Magnetkopf/Bandführungseinheit 3 mit genau parallel zu den Magnetspalten 2a des Magnetkopfes 2 verlaufenden Anlageflächen 6e der Bandführungen 6a bis 6d läßt sich infolge der Ausbildung zweier zunächst getrennter Kunststoffrahmen 1 und 5 folgendermaßen realisieren:
Zunächst wird der Magnetkopf 2 in die Halterung 11 des ersten Kunststoffrahmen 1 reibschlüssig von Hand eingeklemmt bzw. eingeklickt. Der erste Kunststoffrahmen 1 weist keine Bandführungen auf und muß daher auch nicht gegenüber den Magnetspalten des Magnetkopfes ausgerichtet werden. Es muß jedoch sichergestellt sein, daß sich die relative Lage des Magnetkopfes 2 gegenüber der Halterung 11 des Kunststoffrahmens 1 durch die bei Betrieb des Magnetbandkassettengerätes an dem Magnetkopf 2 auftretenden Kräfte nicht ändert.

Danach wird der zweite Kunststoffrahmen 5 mit seinen Bandführungselementen 6a bis 6d gegenüber den Magnetspalten 2a des Magnetkopfes 2, der in der Halterung 11 des ersten Kunststoffrahmen 1 eingeklemmt bzw. eingeklickt ist, ausgerichtet.

In diesem ausgerichteten Zustand müssen die beiden Kunststoffrahmen 1 und 5 nun fest miteinander verbunden werden. Hierfür ist vorzugsweise ein Schweißverfahren einsetzbar, insbesondere Laser- oder Ultraschallschweißen. Der zweite Kunststoffrahmen 5 wird nun mit dem ersten Kunststoffrahmen 1 beispielsweise an den Schweißpunkten 9a bis 9d verschweißt.

Somit ist eine Magnetkopf/Bandführungseinheit 3 verfügbar, deren Bandführungen 6a bis 6d gegenüber den Magnetspalten 2a des Magnetkopfes 2 ausgerichtet sind.

Die gesamte Magnetkopf/Bandführungseinheit 3 kann nun z.B. in eine nicht dargestellte Halterung auf der Kopfplatte eines Magnetbandkassettengerätes eingeklemmt bzw. eingeklickt werden oder auf andere Art befestigt werden.

## Patentansprüche

1. Magnetkopf/Bandführungseinheit (3) für ein Magnetbandkassettengerät mit
• einem ersten Kunststoffrahmen (1) mit einer Halterung (11), in welcher ein Magnetspalten (2a) aufweisender Magnetkopf (2) form- oder reibschlüssig angeordnet ist und
• einem zweiten Kunststoffrahmen (5), der eine erste und eine zweite Bandführung (6b, 6c) aufweist, und der gegenüber den Magnetspalten (2a) derart ausgerichtet und an dem ersten Kunststoffrahmen (1) festgeschweißt ist, dass die Bandführungen beiderseits des Magnetkopfes (2) in dessen unmittelbarer Nähe angeordnet sind und gabelförmig mit vorstehenden, eine Durchzugsbahn (7a) eines Magnetbandes (7) begrenzenden Führungsschenkeln (6b1, 6b2, 6c1, 6c2) ausgebildet sind, sodass die Magnetspuren (7b) eines geführten Magnetbandes (7) und die Magnetspalten (2a) übereinanderliegen.

2. Magnetkopf/Bandführungseinheit nach Anspruch 1, **dadurch gekennzeichnet, dass** der zweite Kunststoffrahmen (5) eine dritte (6a) und eine vierte (6d) Bandführung aufweist, die jeweils beiderseits des Magnetkopfes (2) weiter außen liegend auf Abstand vom Magnetkopf (2) und den ihm benachbarten ersten und zweiten Bandführungen (6b, 6c) angeordnet sind, wobei die dritte (6a) und vierte (6d) Bandführung jeweils gabelförmig mit vorstehenden, die Durchzugsbahn (7a) des Magnetbandes (7) begrenzenden Führungsschenkeln (6a1, 6a2, 6d1, 6d2) ausgebildet sind.

3. Magnetkopf/Bandführungseinheit nach Anspruch 1 oder 2, **dadurch gekennzeichnet, dass** der erste Kunststoffrahmen (1) wenigstens zwei Befestigungsschenkel (4a, 4b) aufweist, die frei von dem Magnetkopf (2) abstehend ausgebildet sind, und dass der zweite Kunststoffrahmen (5) an den Befestigungsschenkeln (4a, 4b) des ersten Kunststoffrahmens (1) befestigt ist.

4. Magnetkopf/Bandführungseinheit nach Anspruch 3, **dadurch gekennzeichnet, dass** der zweite Kunststoffrahmen (5) an den Befestigungsschenkeln (4a, 4b) des ersten Kunststoffrahmens (1) jeweils zwischen der ersten (6b) und der dritten (6a) Bandführung und zwischen der zweiten (6c) und der vierten (6d) Bandführung befestigt ist.

5. Verfahren zur Herstellung einer Magnetkopf/Bandführungseinheit (3) für ein Magnetbandkassettengerät, beinhaltend die Schritte
• Ausbilden zweier zunächst getrennter Kunststoffrahmen, wobei
○ ein Magnetspalte (2a) aufweisender Magnetkopf (2) in der Halterung (11) des ersten Kunststoffrahmens form- oder reibschlüssig angeordnet wird und
○ der zweite Kunststoffrahmen eine erste und eine zweite Bandführung (6b, 6c) aufweist, wobei die Bandführungen gabelförmig mit vorstehenden Führungsschenkeln (6b1, 6b2, 6c1, 6c2) ausgebildet werden,
• Ausrichten des zweiten Kunsutoffrahmens zum ersten Kunststoffrahmen, sodass die Bandführungen beiderseits des Magnetkopfes (2) in dessen unmittelbarer Nähe angeordnet sind und die Führungsschenkel (6b1, 6b2, 6c1, 6c2) eine Durchzugsbahn (7a) eines Magnetbandes (7) derart begrenzen, dass die Magnetspuren (7b) eines geführten Magnetbandes (7) und die Magnetspalte (2a) übereinanderliegen,
• Befestigen des zweiten Kunststoffrahmens am ersten Kunststoffrahmen mittels eines Schweißvorganges.

6. Verfahren nach Anspruch 5, **dadurch gekennzeichnet, dass** der Schweißvorgang jeweils zwischen der ersten (6b) und der dritten (6a) und zwischen der zweiten (6c) und der vierten (6d) Bandführung erfolgt.

7. Verfahren nach Anspruch 6, **dadurch gekennzeichnet, dass** es sich bei dem Schweißvorgang um einen Ultraschall- oder Laserschweißvorgang handelt.

8. Laufwerk mit einer Magnetkopf/Bandführungseinheit nach einem der Ansprüche 1 bis 4.

9. Magnetbandkassettengerät mit einem Laufwerk nach Anspruch 8.

## Claims

1. A magnetic head/tape guiding device (3) for a magnetic-tape-cassette apparatus, comprising
• a first plastic frame (1) with a holder (11) in which a magnetic head (2) with head gaps (2a) is mounted frictionally or in interlocked fashion, and
• a second plastic frame (5) having a first and a second tape guide (6b, 6c) and being aligned relative to the head gaps (2a) and welded to the first plastic frame (1), so that the tape guides on either one of the two sides of the magnetic head (2) are mounted in its proximity and are arranged as fork-shaped projecting guide limbs (6b1, 6b2, 6c1, 6c2) bounding a plane of transport (7a) of a magnetic tape (7), so that the magnetic tracks (7b) of a guided magnetic tape (7) and the head gaps (2A) coincide.

2. A magnetic head/tape guiding device as claimed in Claim 1, **characterized in that** the second plastic frame (5) comprises a third (6a) and a fourth (6d) tape guide arranged one on either side of the magnetic head (2) and at a larger distance than the respective first and second tape guides (6b, 6c) adjacent said head, the third (6a) and the fourth (6d) tape guide each being fork-shaped and having projecting guide limbs (6a₁, 6a₂, 6d₁, 6d₂) which bound the plane of transport (7a) of the magnetic tape (7).

3. A magnetic head/tape guiding device as claimed in Claim 1 or 2, **characterized in that** the first plastic frame (1) comprises at least two mounting limbs (4a, 4b) which project freely away from the magnetic head (2), and the second plastic frame (5) has been secured to the mounting limbs (4a, 4b) of the first plastic frame (1).

4. A magnetic head/tape guiding device as claimed in Claim 3, **characterized in that** the second plastic frame (5) is secured to the mounting limbs (4a, 4b) of the first plastic frame (1) between the first (6b) and the third (6a) tape guide and between the second (6c) and the fourth (6d) tape guide.

5. A method of manufacturing a magnetic head/tape guiding device (3) for a magnetic tape cassette apparatus, comprising the steps of
• forming two in the first instance separate plastic frames, where
○ a magnetic head (2) having a head gap (2a) is frictionally mounted in the holder (11) of the first plastic frame or interlocked in it and
○ the second plastic frame has a first and a second tape guide (6b, 6c), the tape guides being fork-shaped with projecting guiding limbs (6b1, 6b2, 6c1, 6c2),
• aligning the second plastic frame to the first plastic frame, so that the tape guides on either one of the two sides of the magnetic head (2) are mounted in proximity of the latter and the guiding limbs (6b1, 6b2, 6c1, 6c2) bound a plane of transport (7a) of a magnetic tape (7) so that the magnetic tracks (7b) of a guided magnetic tape (7) and the head gap (2a) coincide,
• mounting the second plastic frame on the first plastic frame frictionally or in interlocked fashion.

6. A method as claimed in Claim 5, **characterized in that** the welding process takes place between the first (6b) and the third (6a) tape guide and between the second (6c) and the fourth (6d) tape guide.

7. A method as claimed in Claim 6, **characterized in that** the welding process is an ultrasonic welding process or a laser welding process.

8. A tape deck comprising a magnetic head/tape guiding device as claimed in any one of the Claims 1 to 4.

9. A magnetic-tape-cassette apparatus comprising a tape deck as claimed in Claim 8.

## Revendications

1. Unité à tête magnétique/guidage de bande (3) pour un magnétophone à cassette avec :
- un premier châssis en plastique (1) avec un support (11) dans lequel est insérée par crabots ou par pression une tête magnétique (2) présentant des entrefers magnétiques (2a), et
- un deuxième châssis en plastique (5) qui présente des premier et deuxième guidages de bande (6b, 6c) et qui est orienté par rapport aux entrefers magnétiques (2a) et soudé à demeure au premier châssis en plastique (1) de telle sorte que les guidages de bande soient disposés de part et d'autre de la tête magnétique (2) à proximité directe de celle-ci et conçus en forme de fourche avec des côtés de guidage (6b1, 6b2, 6c1, 6c2) saillants, délimitant une piste de passage (7a) d'une bande magnétique (7) de telle sorte que les pistes magnétiques (7b) d'une bande magnétique (7) guidée et les entrefers magnétiques (2a) soient superposés.

2. Unité à tête magnétique/guidage de bande selon la revendication 1, **caractérisée en ce que** le deuxième châssis en plastique (5) présente des troisième (6a) et quatrième (6d) guidages de bande qui sont respectivement disposés de part et d'autre de la tête magnétique (2) plus vers l'extérieur à un intervalle de la tête magnétique (2) et des premier et deuxième guidages de bande (6b, 6c) voisins de celle-ci, les troisième (6a) et quatrième (6d) guidages de bande étant respectivement conçus en forme de fourche avec des côtés de guidage (6a1, 6a2, 6d1, 6d2) saillants, délimitant la piste de passage (7a) de la bande magnétique (7).

3. Unité à tête magnétique/guidage de bande selon l'une des revendications 1 ou 2, **caractérisée en ce que** le premier châssis en plastique (1) présente au moins deux côtés de fixation (4a, 4b) qui sont conçus pour déborder librement de la tête magnétique (2) et que le deuxième châssis en plastique (5) est fixé aux côtés de fixation (4a, 4b) du premier châssis en plastique (1).

4. Unité à tête magnétique/guidage de bande selon la revendication 3, **caractérisée en ce que** le deuxième châssis en plastique (5) est fixé aux côtés de fixation (4a, 4b) du premier châssis en plastique (1), respectivement entre les premier (6b) et troisième (6a) guidages de bande et entre les deuxième (6c) et quatrième (6d) guidages de bande.

5. Procédé de fabrication d'une unité à tête magnétique/guidage de bande (3) pour un magnétophone à cassette contenant les étapes suivantes:
• conception de deux châssis en plastique d'abord séparés
○ une tête magnétique (2) présentant un entrefer magnétique (2a) étant insérée par crabots ou par pression dans le support (11) du premier châssis en plastique, et
○ le deuxième châssis en plastique présentant des premier et deuxième guidages de bande (6b, 6c), les guidages de bande étant conçus en forme de fourche avec des côtés de guidage (6b1, 6b2, 6c1, 6c2) saillants,
• orientation du deuxième châssis en plastique par rapport au premier châssis en plastique de telle sorte que les guidages de bande soient disposés de part et d'autre de la tête magnétique (2) à proximité directe de celle-ci et que les côtés de guidage (6b1, 6b2, 6c1, 6c2) délimitent une piste de passage (7a) d'une bande magnétique (7) de telle sorte que les pistes magnétiques (7b) d'une bande magnétique (7) guidée et les entrefers magnétiques (2a) soient superposés,
• fixation du deuxième châssis en plastique au premier châssis en plastique à l'aide d'une procédure de soudage.

6. Procédé selon la revendication 5, **caractérisé en ce que** la procédure de soudage intervient respectivement entre les premier (6b) et troisième (6a) et entre les deuxième (6c) et quatrième (6d) guidages de bande.

7. Procédé selon la revendication 6, **caractérisé en ce que** la procédure de soudage fait appel à un processus de soudage à ultrasons ou au laser.

8. Mécanisme d'entraînement avec une unité à tête magnétique/guidage de bande selon l'une des revendications 1 à 4.

9. Magnétophone à cassettes avec un mécanisme d'entraînement selon la revendication 8.
